# FASCICULE DE BREVET EUROPEEN

(11) **EP 0 995 289 B1**
(45) Date de publication et mention de la délivrance du brevet: **04.01.2006**
(21) Numéro de dépôt: 98938726.1
(22) Date de dépôt: 10.07.1998
(51) Int. Cl.: H04L 12/28, H04M 11/06, H04M 11/00

(54) **DISPOSITIF INTERFACE DE COMMUNICATION ENTRE UNE INSTALLATION TERMINALE D'ABONNE D'UN RESEAU EXTERNE ET UN RESEAU INTERNE**
KOMMUNIKATIONSSCHNITTSTELLE ZWISCHEN EINEM TEILNEHMERENDGERÄT EINES ÄUSSEREN NETZWERKS UND EINEM INTERNEN NETZWERK
INTERFACE DEVICE FOR COMMUNICATION BETWEEN AN EXTERNAL NETWORK SUBSCRIBER'S TERMINAL INSTALLATION AND AN INTERNAL NETWORK

(30) Priorité: 11.07.1997 FR 9708862
(43) Date de publication de la demande: 26.04.2000
(73) Titulaire: FRANCE TELECOM, 75015 Paris (FR)
(72) Inventeur: CALVEZ, Serge, F-22307 Lannion Cedex (FR)
(74) Mandataire: Ilgart, Jean-Christophe
(86) Numéro de dépôt international: PCT/FR1998/001510
(87) Numéro de publication internationale: WO 1999/003229

(56) Documents cités:
- EP-A- 0 639 019
- WO-A-97/09800
- WO-A-97/19538
- GB-A- 2 194 710
- BABICH F: "HOME NETWORK REQUIREMENTS. THE ESPRIT HS PROPOSAL" EUROPEAN TRANSACTIONS ON TELECOMMUNICATIONS AND RELATED TECHNOLOGIES, vol. 5, no. 1, 1 janvier 1994, pages 93-106, XP000445720

## Description

### Domaine de l'invention

La présente invention concerne un dispositif interface et aiguillage de communication entre une installation terminale d'abonné d'un réseau externe et un réseau interne.

### Etat de la technique antérieure

Dans le cadre de l'évolution des télécommunications, la multiplication des matériels et fonctions proposés au niveau des installations terminales conduit à une demande d'accroissement des possibilités d'accès au réseau de télécommunication, ce qui rend le fonctionnement de ces installations de plus en plus complexe, voire même ingérable.

Depuis plusieurs années, les développements de matériels, permettant de télégérer ou de téléagir via un réseau supportant les échanges de données, laissent entrevoir de multiples applications.

L'inconvénient majeur d'une telle multiplication des applications est un risque accru de dysfonctionnements répétés en raison de l'incohérence et de la non gestion globale des installations.

Il est donc nécessaire de pouvoir maîtriser une telle prolifération potentielle et ainsi préserver les capacités premières du réseau de télécommunication.

L'invention a pour objet de résoudre ces différents problèmes.

Un document de l'art antérieur, EP-A-0 639 019, décrit un circuit interface téléphonique pour un bus de données domestique. Ce circuit interface permet une communication dans les deux sens avec des dispositifs électriques connectés à un bus de données pour gérer intégralement une cuisine domestique, via une ligne téléphonique. Il comprend un contrôleur principal, un détecteur de signal qui est interconnecté avec un générateur/détecteur de son téléphonique, et un enregistreur/reproducteur de signaux de son comportant des mémoires de message utilisateur, plusieurs mémoires externes maintenant des données de réponse fixées adressées par le contrôleur en utilisant un procédé de décodage, et un modem FSK pour coupler ledit bus de données au circuit interface.

### Exposé de l'invention

La présente invention concerne un dispositif interface et aiguillage de communication entre une installation terminale d'abonné d'un réseau externe et un réseau interne, auquel sont raccordées plusieurs entités matérielles, comprenant:
- un premier module d'interface d'émission-réception de données numériques ou de signaux analogiques, connecté à ladite installation terminale ;
- un second module interface d'émission-réception de données numériques ou de signaux analogiques, connecté au réseau interne ;
- un module de traitement, connecté à au moins un module de mémoire, qui gère le fonctionnement général dudit dispositif de manière à assurer une fonction de maître de ladite installation terminale d'abonné en supervisant à la fois l'état de disponibilité du réseau externe et l'état du réseau interne duquel et vers lequel des requêtes et acquittements peuvent être entre autres échangées, une entité matérielle ne se connectant que sur autorisation de ce module de traitement:
   - directement au réseau externe,
   - ou via ce module de traitement,
   cela se faisant après gestion des priorités par ce module de traitement ;

caractérisé en ce qu'il comprend :
- plusieurs module de détection assurant chacun une fonction de détection d'une action de mise en communication d'une desdites entités sur le réseau externe :
   - un premier module assurant la fonction détection de ligne occupée,
   - un second module assurant la fonction détection du décroché d'un poste en parallèle,
   - un troisième module assurant la fonction détection d'une tonalité d'occupation,
   - un quatrième module assurant la fonction détection d'indication d'appel en instance ;
ces modules de détection communiquant et échangeant des données avec le module de traitement ;
- un module de gestion du protocole sur le réseau interne qui est associé au second module interface d'émission-réception, le module de traitement étant raccordé via des ports d'entrée-sortie à un bus d'échange de données permettant de communiquer avec ce module ;
- un circuit tampon d'entrée-sortie relié au module de traitement de manière à permettre le branchement d'un module interface homme-machine.

Avantageusement le dispositif de l'invention comprend un module remplissant la fonction de modem, relié au premier module interface, au quatrième module de détection, au module de traitement, et permettant notamment de décoder des informations V23 sur appel entrant, et le cas échéant, de décrocher immédiatement et d'initialiser ainsi l'aiguillage approprié vers une des entités matérielles.

Avantageusement le module traitement est connecté à au moins un module de mémoire programme et à au moins un module de mémoire vive permettant de mémoriser des informations propres au réseau interne et/ou des informations propres au réseau externe, informations pouvant être notamment téléchargées et mises à jour via le réseau externe.

Avantageusement le module de gestion de protocole sur le réseau interne permet de gérer les différentes requêtes issues du réseau interne selon des priorités particulières.

Avantageusement le dispositif de l'invention comprend des moyens logiciels ou bien physiques permettant de gérer les conflits possibles entre des appels entrants issus du réseau externe et des demandes d'établissement de communication vers l'extérieur, des moyens permettant d'être autoalimenté, téléalimenté ou alimenté via une autre entité du réseau interne, et des moyens permettant d'être configuré et supervisé via une interface homme-machine attachée ou déportée.

Le réseau externe peut être le réseau téléphonique commuté (RTC), qui dans ce cas peut offrir des services de sonneries différenciées, de présentation de messages V23 en phase d'appel avec un champ « type » particulier, comme un message d'appel télédomotique (type 0 × 88), comme la présentation du numéro de l'appelant (0 × 80), la présentation du nom (ou de l'identité) de la personne (ou de l'entité appelante) (0 × 80) et autres services de sélection directe à l'arrivée sur lesquels s'appuie notamment la fonction d'aiguillage de l'invention.

Le réseau externe peut être également pris parmi les réseaux suivants : réseau numérique à intégration de services (RNIS), réseau ATM (Asynchronous Transfer Mode), réseau xDSL (Digital Subscriber Loop), réseau GSM, réseau DECT, réseau DCS1800, réseau UMTS (Universal Mobile Telecommunications System).

Le réseau interne peut être un réseau à courant porteur, à paires torsadées, à fibres optiques, radio (CT0, CT2, DECT, GSM, DCS1800, PHS, UMTS, UHF...).

Le protocole d'accès au réseau interne peut être du type EHS (ESPRIT Home System), EIBus, PLAN, ou ITD (Interface Telecom Domotique (Club Périnuméris)).

### Brève description des figures

- Les figures 1 à 3 illustrent le dispositif de l'invention ;
- les figures 4 à 7 illustrent le fonctionnement du dispositif de l'invention.

### Exposé détaillé de modes de réalisation

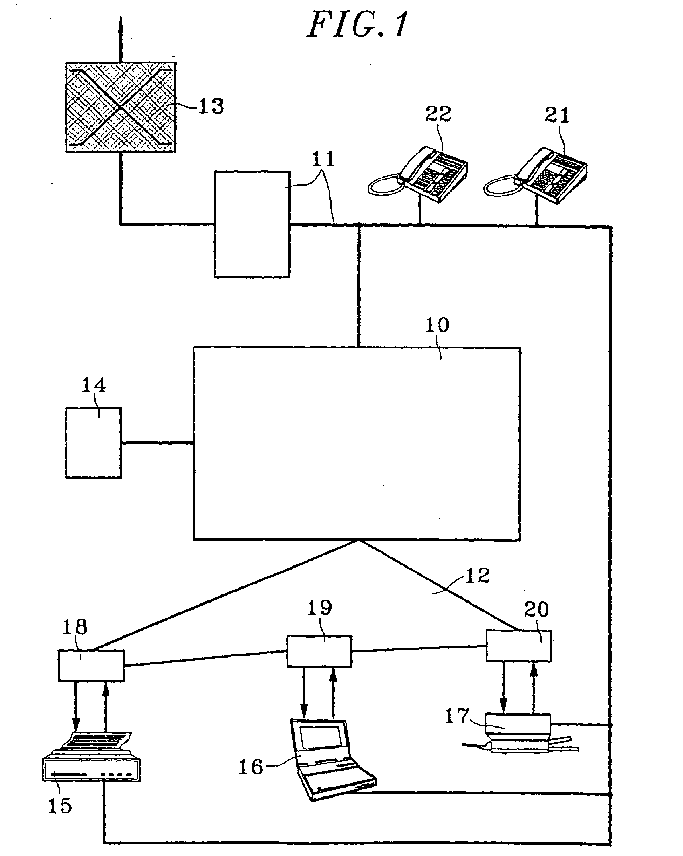

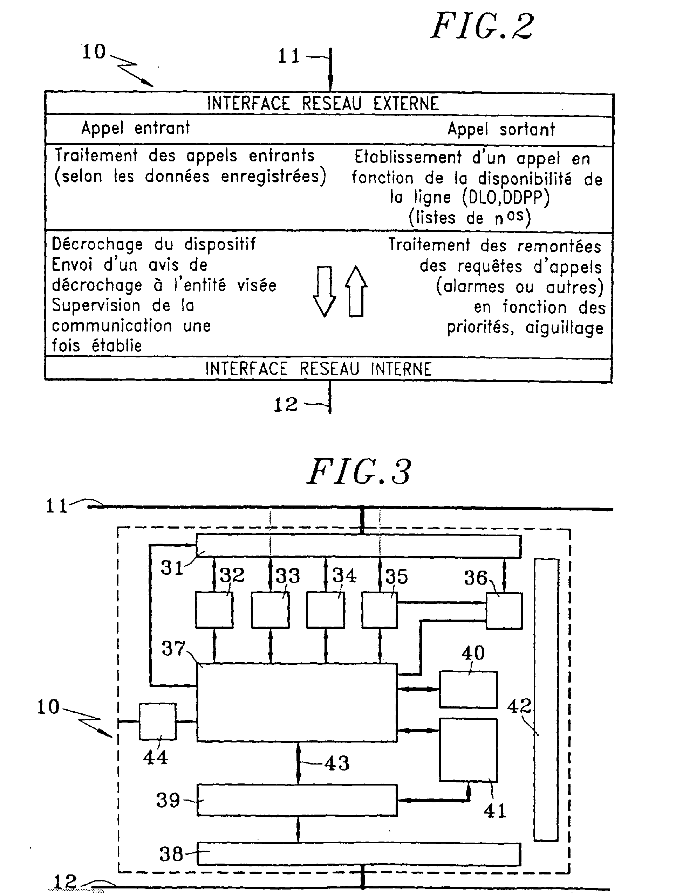

Comme illustré sur les figures 1 et 2, le dispositif de communication 10 selon l'invention pour la réalisation d'une fonction d'interface entre une installation terminale d'abonné 11 d'un réseau externe et un réseau interne 12 comprend d'une part une interface de connexion vers le réseau externe, qui peut être le réseau téléphonique commuté et d'autre part, une interface de connexion au réseau interne.

Sur la figure 1 sont également représentés un commutateur 13, un module interface homme-machine (IHM) 14, différents appareils 15, 16, 17 disposés entre l'installation terminale d'abonné 11 et une prise d'accès au réseau interne (18, 19, 20). Ces appareils peuvent être par exemple : un télécopieur 15, un micro-ordinateur 16, une imprimante 17. Deux combinés téléphoniques 21 et 22 sont également connectés à l'installation terminale d'abonné 11.

La figure 2 illustre les différentes fonctions du dispositif de l'invention.

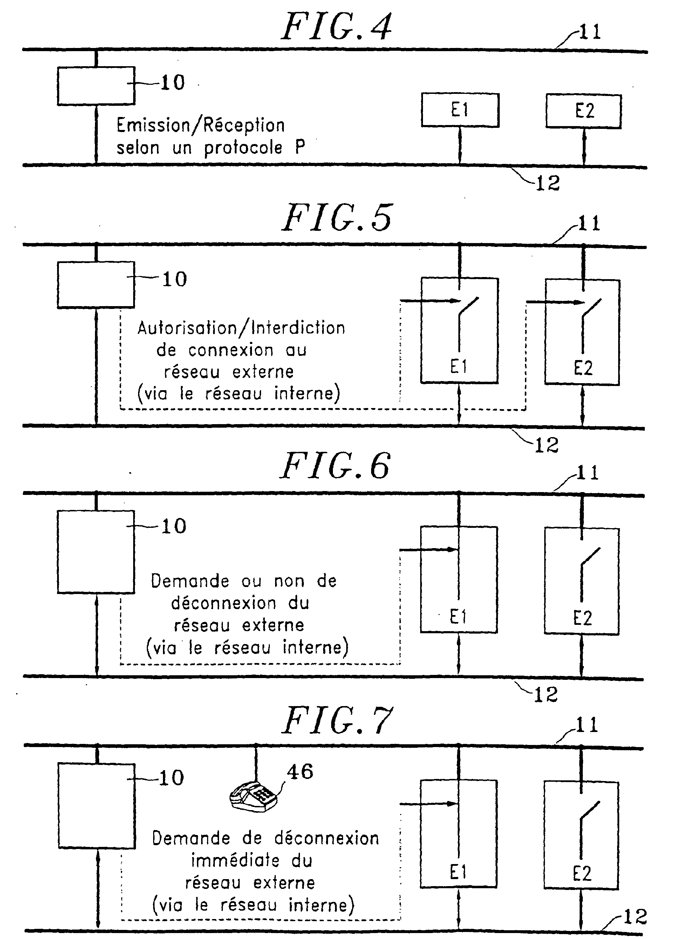

Le dispositif de l'invention permet la gestion ordonnée d'une installation terminale de télécommunication d'un réseau externe. Pour cela, il est d'une part raccordé sur ce réseau externe et dispose, d'autre part, d'un module permettant d'accéder au réseau interne, qui peut être par exemple un réseau électrique d'habitation, sur lequel il est capable d'émettre ou de recevoir des données selon un protocole préalablement défini, venant d'autres entités matérielles Ei (ici E1 et E2) raccordées à ce même réseau interne, comme illustré sur la figure 4. Ces autres entités peuvent avoir des besoins en télécommunication via le réseau externe.

Le dispositif de l'invention comprend des moyens logiciels (choix prioritaires, cycliques, aléatoires..) ou bien physiques (interrupteur, rupture d'alimentation...) permettant de gérer les conflits possibles entre des appels entrants issus du réseau externe et des demandes d'établissement de communication vers l'extérieur.

Le dispositif de l'invention permet d'assurer une fonction de maître en supervisant à la fois l'état de la ligne du réseau externe et l'état du réseau interne, duquel et vers lequel des requêtes et acquittements peuvent être, entre autres, échangés. Les entités Ei raccordées au réseau interne ont donc un accès au réseau externe. Cet accès est sous le contrôle et l'autorisation du dispositif de l'invention qui gère les différentes priorités. En mode repos, vis-à-vis d'un échange sur le réseau externe, les entités Ei sont déconnectées comme illustré sur la figure 4. Sur requête préalable de l'une d'entre elles ou sur appel entrant à destination de l'une d'entre elles, le dispositif de l'invention gère l'ensemble des actions de mise en communication entrante ou sortante. Toute entité Ei ne se connecte au réseau externe que sur autorisation du dispositif de l'invention.

Un mode de réalisation du dispositif de l'invention est illustré sur la figure 3.

Un premier module 31 permet de gérer les problèmes d'interface en réception et émission de données numériques ou de signaux analogiques (par exemple la voix) du côté réseau externe. Ce module 31 peut disposer, entre autres comme cela est bien connu de l'homme de l'art, d'un circuit de transmission, d'un pont de diodes, d'un circuit de numérotation DTMF (« Dual Tone Multi Frequency »), et d'un dispositif de décrochage.

A travers ce module 31 transitent (en mode raccroché ou décroché) les informations issues du réseau externe (comme les trames V23) ou les éléments utiles aux différents modules de détection 32, 33, 34, 35 et 36 (comme des niveaux de tension, des fréquences spécifiques).

Ces modules de détection sont :
- un module 32 assurant la fonction détection ligne occupée [DLO] dont un des principes utilisés peut être la comparaison de tension de ligne à une tension de référence au repos, tension qui est mémorisée ;
- un module 33 assurant la fonction détection du décroché d'un poste en parallèle [DDPP] dont un des principes utilisés peut être la comparaison de tension de ligne à une tension de référence mémorisée, cela en mode raccroché vis-à-vis du dispositif de l'invention, alors qu'une entité Ei est en cours de communication et est donc décrochée ;
- un module 34 assurant la fonction détection d'une tonalité d'occupation [DTO] dont une réalisation peut être un filtre de détection de la fréquence 440 Hz en mode décroché vis-à-vis du dispositif de l'invention ;
- un module 35 assurant la fonction détection d'indication d'appel en instance [DIAI] dont une réalisation peut être un filtre de détection de la fréquence 440 Hz cadencée, cela en mode raccroché vis-à-vis du dispositif de l'invention, alors qu'une entité est en cours de communication et est donc décrochée ;
- un module 36 qui remplit la fonction de modem V23 et peut donc être sollicité directement par le module 31 ou bien via le module 35 sur réception d'un message V23 après indication d'appel en instance. Ce module 36 permet notamment de décoder des informations V23 sur appel entrant (présentation du numéro de l'appelant sur RTC, type de messages particuliers comme 0 x 80, 0 x 82, 0 x 88...), et le cas échéant (par exemple présence du numéro de l'appelant dans une liste de numéros possibles) de décrocher immédiatement (i.e. avant les premiers trains de sonneries sur RTC) et d'initialiser ainsi l'aiguillage approprié vers une des entités matérielles 15, 16, 17 ; « aiguillage » signifiant ici « adresser puis abouter la communication » vers l'entité concernée ou bien « adresser simplement » l'entité concernée et lui demander de se connecter directement au réseau externe.

Tous ces modules 31 à 36 communiquent et échangent des données avec un module de traitement 37 qui remplit la fonction de microcontrôleur et gère par conséquent le fonctionnement général du système de manière à assurer une fonction de maître de ladite installation terminale d'abonné 11 en supervisant à la fois l'état de disponibilité du réseau externe et l'état du réseau interne duquel et vers lequel des requêtes et acquittements peuvent être entre autres échangées, une entité matérielle 15, 16, 17 ne se connectant que sur autorisation de ce module de traitement 37 :
- directement au réseau externe (supervision « parallèle » de la communication établie, interruption uniquement possible par commande via le réseau interne),
- ou via ce module de traitement 37 (supervision « série » de la communication établie, interruption possible par rupture d'échanges de données sur le bus 43 ou par commande via le réseau interne),
cela se faisant après gestion des priorités par ce module de traitement.

Ce module 37 dispose d'un module 40 qui représente la mémoire programme du dispositif (ROM).

Il dispose de plus d'un module 41 qui est une mémoire vive (RAM) ou des buffers nécessaires à la gestion de conflits ou de piles.

Le module traitement 37 est ainsi connecté à au moins un module de mémoire programme 40 et à au moins un module de mémoire vive 41 permettant de mémoriser des informations propres au réseau interne et/ou des informations propres au réseau externe, informations pouvant être notamment téléchargées et mises à jour via le réseau externe.

Ce module 37 est raccordé via des ports d'entrées/sorties à un bus d'échange de données 43 permettant de communiquer avec un module 39 qui représente l'entité de gestion du protocole sur réseau interne, entité qui peut être également un microcontrôleur équipé de périphériques adéquats. Ce module 39 est associé à l'interface d'émission/réception 38 de données numériques ou de signaux analogiques (par exemple la voix) connectée sur le réseau interne 12.

Le module 39 de gestion de protocole sur le réseau interne permet de gérer les différentes requêtes issues du réseau interne selon des priorités particulières (protocole devant disposer d'un niveau 3 (couche OSI) et permettant donc de gérer plusieurs entités matérielles 15, 16, 17 ; Ei au cours d'une même session).

Le bloc constitué par les modules 38 et 39 peut être amovible et donc interchangeable en cas d'évolution du protocole ou du support du réseau interne 12.

Le module 42 représente le bloc d'alimentation constitué de batteries, d'un transformateur et d'une connectique vers l'extérieur. Ce module 42 est relié aux différents modules constitutifs du dispositif de l'invention bien que cela ne soit pas représenté sur la figure 3 pour des raisons de simplification.

Un circuit tampon d'entrée/sortie 44, relié au module de traitement 37, permet le branchement du module interface homme-machine 14 directement sur le dispositif de l'invention 10.

Ce module interface homme-machine 14 peut également être connecté sur le réseau interne. Il est alors relié au module 37 au travers des modules 39 et 38.

Grâce au module 32 de détection de ligne occupée [DLO], le dispositif de l'invention peut savoir à tout moment quand il y a raccrochage sur la ligne de la part d'une entité ou d'un autre terminal de la ligne, et donc quand la ligne est disponible, comme illustré sur la figure 5.

Une fois la connexion, sur requête ou manifestation d'une entité domotique pour un appel sortant, et la communication établies, le dispositif de l'invention « raccroche » vis-à-vis du réseau externe et laisse se poursuivre de façon transparente les échanges sur le réseau externe.

Grâce au module 33 de détection du décroché d'un poste en parallèle [DDPP] le dispositif de l'invention peut savoir à tout moment quand un terminal « téléphonique » 46, connecté sur l'installation réseau externe, a décroché et donc commander, via le réseau interne 12, le raccrochage immédiat de l'entité qui est en cours de communication sur le réseau externe comme illustré sur la figure 7.

Grâce au module 34 de détection d'une tonalité d'occupation [DTO] lors d'une tentative d'appel sortant, le dispositif de l'invention peut gérer de façon « intelligente » la suite des événements : raccrochage, échange d'informations avec une entité pour savoir s'il faut ou non faire une nouvelle tentative, possibilité de gérer une temporisation avant une nouvelle tentative, comme illustré sur la figure 5.

Grâce au module 35 de détection du signal d'indication d'appel (440 Hz) [DIAI] en instance, le dispositif de l'invention peut savoir à tout moment s'il y a un appel entrant en attente. La transmission éventuelle de données en mode décroché (c'est un terminal téléphonique ou une entité qui est ici en mode décroché) couplée au signal d'indication d'appel en instance permet au dispositif, qui est raccroché et « espionne » la ligne, d'obtenir des informations sur l'appel entrant (nature, identité, ..), cela grâce à son modem de réception V23, comme illustré sur la figure 6.

Dans un mode de réalisation avantageux le dispositif de l'invention a les caractéristiques suivantes :
- fonctionnalités internes DTO, DLO, DIAI, DDPP ;
- sous module d'accès au réseau externe par exemple : Interface RTC répondant aux normes en vigueur ;
- sous module d'accès au réseau interne (par exemple : CPL avec protocole EHS) ;
- fonction de traitements des données issues du réseau interne (protocole adéquat) ;
- fonction de traitements des appels entrants (en mode « ligne raccrochée » ou « ligne décrochée ») : gestion des informations V23 issues du réseau RTC, possibilité d'empaquetage dans le protocole utilisé sur réseau interne, décrochage ;
- fonction de traitements des appels sortants : décrochage, numérotation ;
- fonction de mémorisation possible d'informations nécessaires à l'initialisation d'appel vers le réseau RTC ;
- fonction de mémorisation possible d'informations nécessaires à l'adressage direct ou indirect d'entités raccordées au réseau interne.

Le dispositif de l'invention peut être autoalimenté (batteries, piles, capteurs lumineux...), téléalimenté (via le réseau externe) ou alimenté via une autre entité du réseau interne. De plus, il peut être configuré et supervisé via une interface homme-machine attachée (comme illustré sur la figure 1) ou déportée (téléconfiguration, téléchargement) (reliée au réseau interne 12).

### GLOSSAIRE

- CPL :: Courant Porteur sur Ligne d'énergie
- DDPP :: Détection du Décroché d'un Poste en Parallèle
- DECT :: « Digital European Cordless Telephone »
(Téléphone sans fil numérique européen)
- DIAI :: Détection du signal d'Indication d'Appel en Instance
- DLMS :: « Distribution Line Message Specification »
(spécification de message à ligne de distribution)
- DLO :: Détection de Ligne Occupée
- DTMF :: « Dual Tone Multi Frequency » (Multifréquentiel à deux tons)
- DTO :: Détection d'une Tonalité d'Occupation
- EHS : «: European Home System » (Système domotique Européen)
- EIBus :: Protocole CEN TC 105
- GSM : «: Global System for Mobile communications »
(Système global pour communication avec des mobiles
- IHM :: Interface Homme/machine
- ITA :: Installation Terminale d'Abonné
- MC :: Module de Communication
- PLAN :: « Power Line Automation Network » (Protocole de communication DLMS sur CPL)
- RNIS :: Réseau Numérique à Intégration de Services
- RAM : «: Random Access Memory » (mémoire à accès aléatoire)
- ROM :: « Read Only Memory » (Mémoire à lecture seule)
- RTC :: Réseau Téléphonique Commuté
- V23 :: Recommandation V23 livre bleu du CCITT : transmission par modulation à cohérence de phase

## Revendications

1. Dispositif interface et aiguillage de communication entre une installation terminale d'abonné (11) d'un réseau externe et un réseau interne (12), auquel sont raccordées plusieurs entités matérielles (15, 16, 17 ; Ei), comprenant :
- un premier module (31) d'interface d'émission-réception de données numériques ou de signaux analogiques, connecté à ladite installation terminale (11) ;
- un second module (38) interface d'émission-réception de données numériques ou de signaux analogiques, connecté au réseau interne (12) ;
- un module de traitement (37), connecté à au moins un module de mémoire (40, 41), qui gère le fonctionnement général dudit dispositif de manière à assurer une fonction de maître de ladite installation terminale d'abonné (11) en supervisant à la fois l'état de disponibilité du réseau externe et l'état du réseau interne duquel et vers lequel des requêtes et acquittements peuvent être entre autres échangées, une entité matérielle (15, 16, 17) ne se connectant que sur autorisation de ce module de traitement (37) :
• directement au réseau externe;
• ou via ce module de traitement (37), cela se faisant après gestion des priorités par ce module de traitement (37) ;
• un module (35) assurant la fonction détection d'indication d'appel en instance ;
**caractérisé en ce qu'**il comprend:
- plusieurs modules de détection (32, 33, 34, 36) assurant chacun une fonction de détection d'une action de mise en communication d'une desdites entités sur le réseau externe :
• un premier module (32) assurant la fonction détection de ligne occupée,
• un second module (33) assurant la fonction détection du décroché d'un poste en parallèle,
• un troisième module (34) assurant la fonction détection d'une tonalité d'occupation,
les modules de détection communiquant et échangeant des données avec le module de traitement (37) ;
- un module (39) de gestion du protocole sur le réseau interne qui est associé au second module interface d'émission-réception (38), le module de traitement (37) étant raccordé via des ports d'entrée-sortie à un bus d'échange de données (43) permettant de communiquer avec ce module (39) ;
- un circuit tampon d'entrée-sortie (44) relié au module de traitement (37) de manière à permettre le branchement d'un module interface homme-machine (14).

2. Dispositif selon la revendication 1 comprenant un module (36) remplissant la fonction de modem, relié au premier module interface (31), au quatrième module de détection (35), au module de traitement (37), et permettant notamment de décoder des informations V23 sur appel entrant et le cas échéant, de décrocher immédiatement et d'initialiser ainsi l'aiguillage approprié vers une des entités matérielles (15, 16, 17) .

3. Dispositif selon la revendication 1, dans lequel le module de traitement (37) est connecté à au moins un module de mémoire programme (40) et à au moins un module de mémoire vive (41) permettant de mémoriser des informations propres au réseau interne et/ou des informations propres au réseau externe, informations pouvant être notamment téléchargées et mises à jour via le réseau externe.

4. Dispositif selon la revendication 1, dans lequel le module (39) de gestion de protocole sur le réseau interne permet de gérer les différentes requêtes issues du réseau interne selon des priorités particulières.

5. Dispositif selon la revendication 1, qui comprend des moyens logiciels ou bien physiques permettant de gérer les conflits possibles entre des appels entrants issus du réseau externe et des demandes d'établissement de communication vers l'extérieur.

6. Dispositif selon la revendication 1, qui comprend des moyens permettant d'être autoalimenté, téléalimenté ou alimenté via une autre entité du réseau interne.

7. Dispositif selon la revendication 1, qui comprend des moyens permettant d'être configuré et supervisé via une interface homme-machine attachée ou déportée.

8. Dispositif selon la revendication 1, dans lequel le réseau externe est le réseau téléphonique commuté .

9. Dispositif selon la revendication 1, dans lequel le réseau externe est un réseau qui peut être pris parmi les réseaux suivant: réseau numérique à intégration de service, réseau ATM,réseau xDSL, réseau GSM, réseau DECT, réseau DCS1800, réseau UMTS.

10. Dispositif selon la revendication 1, dans lequel le réseau interne est un réseau à courant porteur, à paires torsadées, à fibres optiques, ou radio.

11. Dispositif selon la revendication 1, dans lequel le protocole d'accès au réseau interne est de type EHS, EIBus, PLAN, ou ITD.

## Patentansprüche

1. Schnittstellen- und Lenkungsvorrichtung für die Kommunikation zwischen einer Teilnehmer-Endgeräteinheit (11) eines externen Netzes und einem internen Netz (12), mit dem mehrere Hardware-Entitäten (15, 16, 17; Ei) verbunden sind, die umfasst:
- ein erstes Schnittstellenmodul (31) zum Senden/Empfangen digitaler Daten oder analoger Signale, das mit der Endgeräteinheit (11) verbunden ist;
- ein zweites Schnittstellenmodul (38) zum Senden/Empfangen digitaler Daten oder analoger Signale, das mit dem internen Netz (12) verbunden ist;
- ein Verarbeitungsmodul (37), das mit wenigstens einem Speichermodul (40, 41) verbunden ist und den allgemeinen Betrieb der Vorrichtung in der Weise steuert, dass eine Master-Funktion der Teilnehmer-Endgeräteinheit (11) gewährleistet ist, indem sie zugleich den Verfügbarkeitszustand des externen Netzes und den Zustand des internen Netzes, von dem und zu dem unter anderem Anforderungen und Quittierungen ausgetauscht werden können, überwacht, wobei eine Hardware-Entität (15, 16, 17) nur bei Autorisierung durch dieses Verarbeitungsmodul (37) verbunden wird, und zwar:
- direkt mit dem externen Netz;
- oder über dieses Verarbeitungsmodul (37), was nach der Zuteilung der Prioritäten durch dieses Verarbeitungsmodul (37) geschieht;
- wobei ein Modul (35) die Funktion der Erfassung der Anzeige eines anstehenden Anrufs gewährleistet;
**dadurch gekennzeichnet, dass** es umfasst:
- mehrere Erfassungsmodule (32, 33, 34, 36), die jeweils eine Funktion der Erfassung des Vorgangs des Durchschaltens einer der Entitäten in dem externen Netz gewährleisten, wobei:
- ein erstes Modul (32) die Funktion der Erfassung einer besetzten Leitung gewährleistet,
- ein zweites Modul (33) die Funktion der Erfassung eines nicht aufgelegten parallelen Geräts gewährleistet,
- ein drittes Modul (34) die Funktion der Erfassung eines Besetzttons gewährleistet,
wobei die Erfassungsmodule mit dem Verarbeitungsmodul (37) kommunizieren und Daten austauschen;
- ein Protokoll-Steuermodul (39) in dem internen Netz, das dem zweiten Sende/Empfangs-Schnittstellenmodul (38) zugeordnet ist, wobei das Verarbeitungsmodul (37) über Eingangs/Ausgangs-Ports mit einem Datenaustauschbus (43) verbunden ist, der ermöglicht, mit diesem Modul (39) zu kommunizieren;
- eine Eingangs/Ausgangs-Pufferschaltung (44), die mit dem Verarbeitungsmodul (37) in der Weise verbunden ist, dass der Anschluss eines Mensch/Maschine-Schnittstellenmoduls (14) möglich ist.

2. Vorrichtung nach Anspruch 1, die ein Modul (36) umfasst, das die Modemfunktion erfüllt und mit dem ersten Schnittstellenmodul (31), dem vierten Erfassungsmodul (35) und dem Verarbeitungsmodul (37) verbunden ist und insbesondere ermöglicht, V23-Informationen bei einem ankommenden Anruf zu decodieren und gegebenenfalls sofort abzunehmen und somit die geeignete Lenkung zu einer der Hardware-Entitäten (15, 16, 17) zu initialisieren.

3. Vorrichtung nach Anspruch 1, in der das Verarbeitungsmodul (37) mit wenigstens einem Programm-Speichermodul (40) und mit wenigstens einem Schreib-Lese-Speichermodul (41), das die Speicherung von Informationen bezüglich des internen Netzes und/oder von Informationen bezüglich des externen Netzes ermöglicht, verbunden ist, wobei diese Informationen insbesondere ferngeladen und über das externe Netz aktualisiert werden können.

4. Vorrichtung nach Anspruch 1, in der das Protokoll-Steuermodul (39) in dem internen Netz ermöglicht, die verschiedenen Anforderungen, die von dem internen Netz ausgegeben werden, entsprechend den besonderen Prioritäten zu steuern.

5. Vorrichtung nach Anspruch 1, die Software-Mittel oder aber physikalische Mittel umfasst, die ermöglichen, mögliche Konflikte zwischen den ankommenden Anrufen, die von dem externen Netz stammen, und Anforderungen für einen Kommunikationsaufbau nach außen zu steuern.

6. Vorrichtung nach Anspruch 1, die Mittel umfasst, die selbstversorgt, fernversorgt oder über eine andere Entität des internen Netzes versorgt werden können.

7. Vorrichtung nach Anspruch 1, die Mittel umfasst, die über eine Mensch/Maschinen-Schnittstelle, die fest oder beweglich ist, konfiguriert und überwacht werden können.

8. Vorrichtung nach Anspruch 1, in der das externe Netz das Telephonvermittlungsnetz ist.

9. Vorrichtung nach Anspruch 1, in der das externe Netz ein Netz ist, das aus den folgenden Netzen genommen werden kann: diensteintegrierendes digitales Fernmeldenetz, ATM-Netz, xDSL-Netz, GSM-Netz, DECT-Netz, DCS1800-Netz und UMTS-Netz.

10. Vorrichtung nach Anspruch 1, in der das interne Netz ein Trägerstromnetz, ein Netz mit verdrillten Doppelleitungen, ein Lichtleitfasernetz oder ein Funknetz ist.

11. Vorrichtung nach Anspruch 1, in der das Protokoll für den Zugriff auf das interne Netz vom Typ EHS, EIBus, PLAN oder ITD ist.

## Claims

1. Interface and switching device for communication between a subscriber terminal installation (11) of an external network and an internal network (12), to which several physical entities (15, 16, 17; Ei) are connected, comprising:
- a first interface module (31) for the transmission and reception of digital data or analogue signals, connected to the said terminal installation (11);
- a second interface module (38) for the transmission and reception of digital data or analogue signals, connected to the internal network (12);
- a processing module (37), connected to at least one memory module (40, 41), which manages the overall operation of the said device so as to provide a function of master of the said subscriber terminal installation (11) by supervising both the state of availability of the external network and the state of the internal network from and to which requests and acknowledgements can amongst other things be exchanged, a physical entity (15, 16, 17) being connected only on authorisation from this processing module (37):
• directly to the external network,
• or via this processing module (37), this taking place after management of the priorities by this processing module (37),
• a module (35) ensuring the particular call indication detection function; **characterized in that** it comprises:
- several detection modules (32, 33, 34, 35, 36) each providing a function of detecting an action of putting in communication one of the said entities on the external network:
• a first module (32) providing the line busy detection function,
• a second module (33) providing the function of parallel handset off-hook detection,
• a third module (34) providing the function of busy tone detection,
- the detection modules communicating and exchanging data with the processing module (37);
- a module (39) for managing the protocol on the internal network which is associated with the second transmission-reception interface module (38), the processing module (37) being connected via input-output ports to a data exchange bus (43) for communicating with this module (39);
- an input-output buffer circuit (44) connected to the processing module (37) so as to permit the connection of a man-machine interface module (14).

2. Device according to claim 1, comprising a module (36) for fulfilling the modem function, connected to the first interface module (31), to the fourth detection module (35) and to the processing module (37), and making it possible notably to decode V23 information on an incoming call and, where necessary, to immediately off-hook and thus initiate the appropriate switching to one of the physical entities (15, 16, 17).

3. Device according to claim 1, in which the processing module (37) is connected to at least one program memory module (40) and to at least one random access module (41) making it possible to store information peculiar to the internal network and/or information peculiar to the external network, information which may notably be downloaded and updated via the external network.

4. Device according to claim 1, in which the module (39) for managing the protocol on the internal network makes it possible to manage the different requests issuing from the internal network in accordance with particular priorities.

5. Device according to claim 1, which comprises software or physical means for managing possible conflicts between incoming calls issuing from the external network and requests to establish communication to the outside.

6. Device according to claim 1, which comprises means making it possible to be self-powered, remotely powered or powered via another entity in the internal network.

7. Device according to claim 1, which comprises means making it possible to be configured and supervised via a man-machine interface, either attached or detached.

8. Device according to claim 1, in which the external network is the switched telephone network.

9. Device according to claim 1, in which the external network is a network which can be taken from amongst the following networks: integrated services digital network, ATM network, xDSL network, GSM network, DECT network, DCS1800 network or UMTS network.

10. Device according to claim 1, in which the internal network is a carrier current, twisted pair, optical fibre or radio network.

11. Device according to claim 1, in which the protocol for access to the internal network is of the EHS, EIBus, PLAN or ITD type.
